# EUROPEAN PATENT APPLICATION

(11) **EP 4 439 420 A1**
(43) Date of publication of application: **02.10.2024**
(21) Application number: 24166552.0
(22) Date of filing: 26.03.2024
(51) Int. Cl.: G06Q 10/0631, G06Q 50/40, G06Q 10/04, G06N 20/00, G06Q 50/26

(54) **AUTONOMOUS AGENT WITH ONLINE MISSION SELF-SIMULATION**

(30) Priority: 27.03.2023 US 202318126550
(71) Applicant: Rockwell Collins, Inc., Cedar Rapids, IA 52498 (US)
(72) Inventor: PAPKE, Daniel K., Marion (US); FUSTER, Joel J., Panama City (US)
(74) Representative: Dehns

(57) **Abstract**

An autonomous agent (102) of a team (100) of autonomous agents (e.g., semi- or fully autonomous vehicles) includes a self-simulator incorporating a faster than real time (FTRT) processing environment for online simulation of each agent of the team. Based on the current mission status and one or more action sets determining the behaviors of the autonomous agents (102; 104; 106; 108; 110), the behaviors of each agent of the team are projected forward within the FTRT environment to determine mission status metrics relevant to the effectiveness of a particular action set towards optimal completion of mission objectives currently assigned to the team. Based on the mission status metrics, the self-simulator can select and provide an action set for optimized completion of mission objectives. For example, the self-simulator can recommend switching to a different preloaded action set or, in some cases, construct an optimized action set selected from multiple preloaded action sets tested in the FTRT environment.

## Description

### BACKGROUND

Autonomous vehicles, e.g., airborne, water-based, or ground-based vehicles, may be programmed to operate semi-independently (e.g., based on limited control input from a human operator) or fully independently (e.g., without active human input, based on predetermined actions, sequences or routines) to emulate human behavior. However, the extent to which even a fully autonomous vehicle can "independently" emulate human behavior without direct human control input may be limited by the vehicle's ability to adapt to changing environmental circumstances: as a world state changes, can the behavior of the vehicle likewise adjust to accommodate these changes? Similarly, the vehicle's ability to adapt to new world states may be limited by the scope of possible world states the designer or programmer has explicitly anticipated and designed for. Accordingly, when the vehicle encounters world state changes not anticipated by the designer, the vehicle may not be able to effectively account for all variable changes.

### SUMMARY

In a first aspect, an autonomous agent (e.g., semi-autonomous or fully autonomous vehicle) capable of online mission self-simulation is disclosed. In embodiments, the agent communicates with other autonomous agents within a team of agents, the team charged with completing a mission involving a set of mission objectives. For example, the agent may store one or more goal states based on a mission objective and associated with progress toward completion of the objective. The agent additionally stores an action configuration including various action sets comprising individual actions to be executed by the agent and defining how the agent behaves in a given environment, e.g., some action sets may be associated with aggressive or passive behavior generally, some action sets may define agent operations under certain environmental conditions. Each agent includes an agent planner (e.g., vehicle planner); based on a current world state and a goal state, for example, the agent planner selects from a currently active action set actions for execution by the agent toward achievement of the goal state. A strategy manager selects the active action state from which the agent planners operate from available action states, based on overall mission status, e.g., progress toward the completion of all mission objectives. Additionally, the strategy manager may switch the current active action set to a different action set in fulfillment of the mission objectives. The agent includes a self-simulator incorporating a faster than real time (FTRT) processing environment wherein a set of agent simulators corresponds to the team of autonomous agents. Based on the current active action set (or an alternative action set selected by the self-simulator, or a hybrid action set assembled from individual actions selected from different preloaded action sets) and the current mission status, the self-simulator projects the behavior of each autonomous agent in the team forward in time within the FTRT environment to determine mission status metrics based on performance under each action set.

In some embodiments, the mission status metrics include a completion time, e.g., an estimated time to completion of the mission objectives based on a particular action set.

In some embodiments, the mission status metrics include a mission success probability, e.g., a likelihood that the mission objectives will be completed based on a particular action set.

In some embodiments, based on the mission status metrics the self-simulator provides the strategy manager with an optimized action set as an alternative to the currently active action set.

In some embodiments, the optimized action set is an alternative preloaded action set selected from the action configuration.

In some embodiments, the optimized action set is a hybrid action set newly assembled by the self-simulator from individual actions selected from different preloaded action sets.

In some embodiments, the strategy manager is capable of receiving control input from a human operator, and may switch the active action set (e.g., to a different preloaded action set or to an optimized action set generated by the self-simulator) based on the control input.

In some embodiments, the autonomous agent is embodied in a semi-autonomous or fully autonomous vehicle, e.g., an aircraft, ground-based vehicle, or water-based vehicle.

In a further aspect, a computer-assisted method for online mission self-simulation is also disclosed. In embodiments, the method includes receiving, via a self-simulator module of an autonomous agent operating as a member of a team of autonomous agents, a mission status corresponding to a completion status of one or more mission objectives to be completed by the team of agents and an action set including actions for execution by the team of agents and defining the behavior of the team of agents in a particular environment or under particular conditions. For example, the action set may be an active action set selected by a strategy manager of the autonomous agent (e.g., a current action set), or an alternative action set (e.g., which may be selected from available preloaded action sets) provided by the self-simulator (e.g., such that the strategy manager "switches" the active action set from the current action set to the alternative action set). The method includes providing the mission status and the action set/s to a faster than real time (FTRT) processing environment of the self-simulator, which includes a set of agent simulators corresponding to each autonomous agent of the team and configured to simulate the behavior of said agent. The method includes projecting the behavior of the team of agents into the future within the FTRT environment to generate a simulated output (e.g., result) from the team of agents based on a particular action set. The method includes determining mission status metrics (e.g., associated with the completion of the current mission objectives by the team) based on the simulated output generated by the agent simulators within the FTRT environment.

In some embodiments, the mission status metrics include a completion time, e.g., an estimated time to completion of all mission objectives based on a particular action set.

In some embodiments, the mission status metrics include a completion probability, e.g., a likelihood of completing all mission objectives based on a particular action set.

In some embodiments, the method includes providing the strategy manager with an optimized action set selected for optimal completion of the mission objectives.

In some embodiments, the optimized action set is an alternative action set (e.g., a preloaded action set other than the currently active action set) selected by the self-simulator based on the mission status metrics.

In some embodiments, the method includes generating the optimized action set based on individual actions selected from two or more different preloaded action sets.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is a block diagram illustrating a team of autonomous agents according to example embodiments of this disclosure;
FIG. 2 is a block diagram illustrating a processing environment of an autonomous agent of the team of FIG. 1, configured for self-simulation according to example embodiments of this disclosure;
FIG. 3 is a block diagram illustrating self-simulation operations of the autonomous agent of FIG. 2; and
FIGS. 4A through 4C are flow diagrams illustrating a method for mission self-simulation according to example embodiments of this disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Broadly speaking, embodiments of the inventive concepts disclosed herein are directed to systems and methods for online self-simulation of future behaviors by an autonomous agent operating as a member of a team of autonomous agents. For example, autonomous agents may include partially autonomous (e.g., partially controlled by a remotely located human operator) or fully autonomous vehicles (e.g., uncrewed aircraft or spacecraft, ground-based or water-based vehicles). The team may be provided with a set of mission objectives to fulfill, e.g., search and rescue, search and destroy, surveillance of a defined area. Within the scope of the assigned mission objectives, environmental circumstances may change in ways not anticipated by the autonomous agents or by their programmers. By way of a non-limiting example, changes in weather or visibility conditions may profoundly affect search and rescue operations such that behavioral or operational changes on the part of the autonomous agents may increase the probability that mission objectives will be fulfilled, or significantly reduce the time in which said objectives will be fulfilled. By providing autonomous agents with the ability to simulate, e.g., within a faster than real time (FTRT) environment, the agents may assess current behaviors and courses of action, but may also evaluate alternative behaviors and operations. Accordingly, the team of autonomous agents may adapt to changing circumstances, rather than relying on a designer's finite ability to anticipate them.

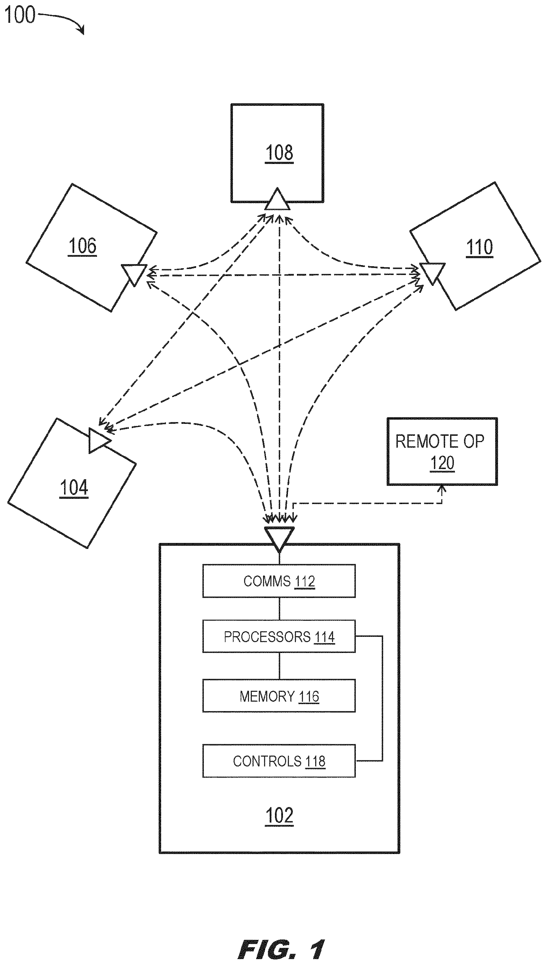

Referring to FIG. 1, a team 100 of autonomous agents is shown. The team 100 may include autonomous agents 102, 104, 106, 108, 110. The autonomous agent 102 may include a communications interface 112, processors 114, memory 116 or like data storage, and vehicular controls 118. The autonomous agents 104-110 may be implemented and may operate similarly to the autonomous agent 102. For example, each autonomous agent 102-110 may be a partially or fully autonomous vehicle (e.g., uncrewed aircraft or spacecraft; ground-based or water-based vehicle; semi-autonomous vehicle wherein vehicular controls 118 are at least partially controlled by a remotely located human operator 120 (e.g., human in the loop)) or sub-team of vehicles operating in formation or collectively toward one or more mission objectives within the team 100.

In embodiments, the autonomous agent 102 (and, similarly, the autonomous agents 104-110) may exchange data and/or status messages by transmission and reception via their respective communications interfaces 112. Further, if the autonomous agent 102 is a fully autonomous vehicle, the processors 114 may issue commands to vehicular controls 118 (e.g., propulsion systems, onboard sensors, weapons systems and/or other payloads) based on mission objectives and/or operating instructions (e.g., action sets) for achieving one or more mission objectives stored to memory 116. In embodiments, the autonomous agent 102 may select one or more action sets stored to memory 116 for execution (or, e.g., one or more action sets may be assigned to the autonomous agent 102 for execution by another agent of the team 100, or by a remote operator 120) for execution in fulfillment of mission objectives. For example, if the team 100 is charged with a search-and rescue mission within a defined geographical area, the autonomous agent 102 may be assigned to search a defined subdivision of the geographical area and may survey the assigned area according to the active action sets until the object of the search is located within the assigned area (or, for example, another agent 104-110 of the team 100 indicates that the object has been located elsewhere). In some embodiments, the autonomous agent 102 may survey the assigned area according to a pattern or algorithm provided by the active action set (e.g., one or more component actions of the active action set may describe the search pattern to be followed, or each component action may correspond to one or more component maneuvers such as a left turn, right turn, climb, descent, etc.). In other embodiments, the active action set followed by the autonomous agent 102 may provide for discretion in selecting locations within the assigned area where the search object is more likely to be. In some embodiments, the subdivision assigned to the autonomous agent 102 for search and rescue may be subject to changing environmental conditions. For example, the team 100 may include autonomous or semi-autonomous uncrewed aircraft performing an aerial search of a geographical area subject to an active wildfire, where the spread rate of the wildfire, changing wind patterns, and/or smoke accumulation may affect in real time the ability of onboard image sensors aboard the autonomous agent 102 to detect and identify the search object. In some embodiments, the active action set may provide for maneuvers or adjustments to the image sensors to accommodate environmental conditions or obstacles associated with the wildfire; alternatively or additionally, a different action set may allow an autonomous vehicle and/or its onboard image sensors to better adapt to wildfire conditions.

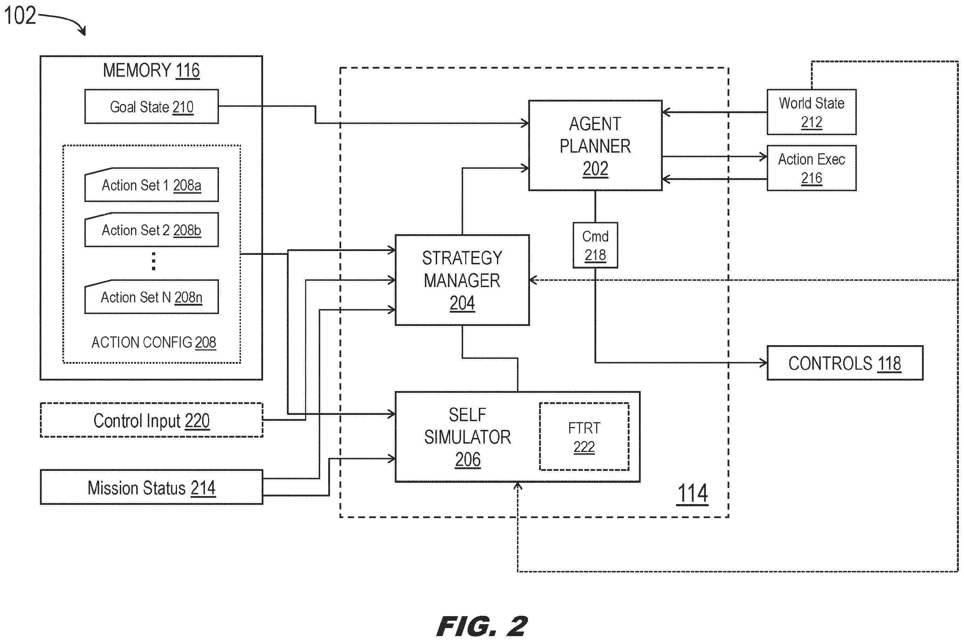

Referring to FIG. 2, the autonomous agent 102 is shown. The processing environment 114 of the autonomous agent 102 may include agent planners 202, strategy managers 204, and self-simulators 206, e.g., as modules or routines executing on the processors 114 of the autonomous agent 102.

In embodiments, one or more predetermined action sets 208a-208n (e.g., action configuration 208) may be preloaded to memory 116 prior to deployment of the autonomous agent 102 (or, e.g., the team (100, FIG. 1) as a whole). For example, each action set 208a-208n may include a set of individual actions for execution by the autonomous agent 102 (e.g., as well as any necessary encoded instructions for the processing environment 114 to execute each action set) and criteria via which the given action set may be useful. In embodiments, the memory 116 may additionally include one or more goal states 210 generated based on active mission objectives for completion by the team 100. For example, goal states 210 may serve as waypoints outlining progress toward the completion of a particular mission objective assigned to the autonomous agent 102 and/or the team 100, where the current world state 212 may represent dynamic variables within the current environment that may affect progress toward a particular goal state, or the ultimate completion of one or more mission objectives. Similarly, a mission status 214 may represent a completion status of a specific mission objective or of an overall set of mission objectives.

In embodiments, the agent planner 202 (e.g., vehicle planner) may continually assess the changing current world state 212 against goal states 210 to determine, e.g., whether a particular goal state has been achieved. For example, the agent planner 202 may receive an active action set selected from the available action sets 208a-208n (e.g., by the strategy manager 204), from which individual actions may be selected for execution (216) outside the agent planner, via which commands 218 may be generated for execution by the vehicular controls 118 of the autonomous agent 102. Further, commands 218 may perform specific adjustments to propulsion or steering systems of the autonomous agent 102 or may activate, deactivate, or manipulate onboard sensors, weapons systems, and/or other payload.

In embodiments, conventional implementations of the processing environment 114 may be able to introduce a degree of limited adaptability to changing circumstances on a reactive basis, e.g., by selecting (e.g., via strategy manager 204) a different action set from the available action sets 208a-208n based on changes in the current world state 212/mission status 214. Similarly, a different action set may be selected based on control input 220 received from a remote human operator (120, FIG. 1). However, as each action set 208a-208n is preloaded, new actions may not be created at runtime.

In embodiments, the processing environment 114 of the autonomous agent 102 may provide for self-controlled adaptivity via online simulation of the behavior of the team 100 and/or its individual autonomous agents 102-110 over time (including into the future). For example, online simulation may be run either offboard (e.g., on resources external to the team 100) or onboard, via self-simulator module 206.

In embodiments, the self-simulator module 206 may include a faster-than-real-time (FTRT) processing environment 222 within which the team 100 and its component autonomous agents 102-110 may be simulated to monitor, and project forward in time, the behavior of the team and agents according to the currently active action set to assess its effect on the fulfillment of mission objectives. For example, the self-simulator module 206 may, based on a given active action set (208a-208n) and mission status 214, simulate the future behavior of the team 100 within the FTRT environment 222 and thereby determine a completion time at which the current set of mission objectives may be fulfilled by the team (e.g., at which the mission status 214 may indicate all mission objectives are complete). Similarly, by simulating the behavior of the team 100 within the FTRT environment according to the active action set (208a-208n), the self-simulator module 206 may assess a probability that the current set of mission objectives may be completed at all by the team 100 according to the currently active action set. Further, the self-simulator module 206 may determine an optimal action set with respect to, e.g., minimizing completion time or maximizing likelihood of completion; the optimal action set may be another preloaded action set or a hybrid action set assembled by the self-simulator module from individual actions selected from different action sets 208a-208n within the action configuration 208.

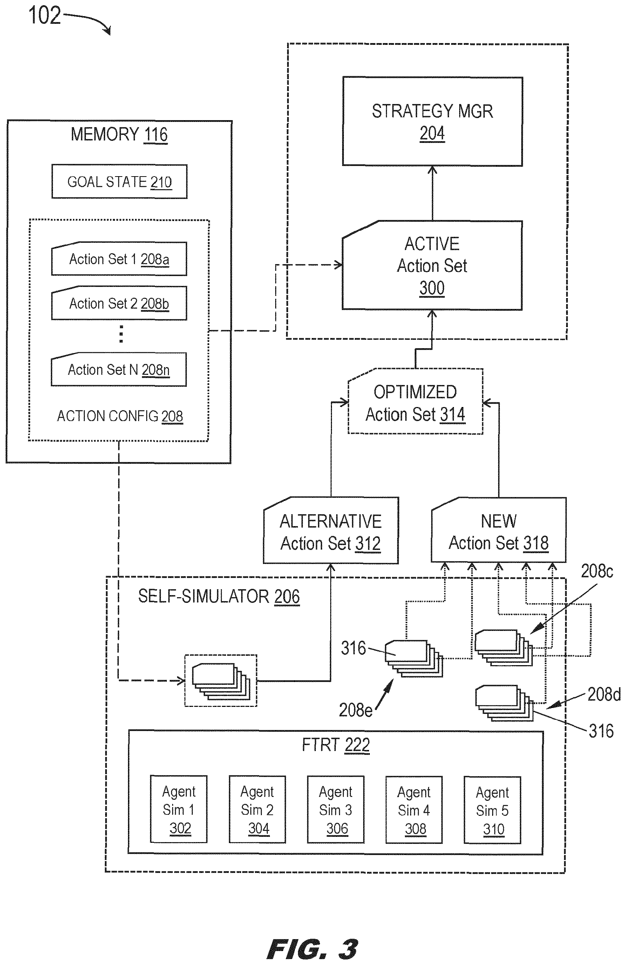

Referring also to FIG. 3, the strategy manager 204 and self-simulator module 206 of the autonomous agent 102 are shown.

In embodiments, the self-simulator module 206 may provide proactive adaptability beyond that outlined above with respect to FIG. 2 by assessing not only the currently active action set 300, but the effectiveness of modifying the behavior of the team 100 and/or autonomous agents 102-110 by switching to a new action set 208a-208n. For example, the self-simulator module 206 may create within the FTRT environment 222 agent simulators 302, 304, 306, 308, 310 respectively configured to emulate the autonomous agents 102, 104, 106, 108, 110 (FIG. 1), e.g., such that each agent simulator 302-310 is configured to behave as its counterpart autonomous agent 102-110 would behave based on a selected action set 208a-208n. Accordingly, in embodiments the self-simulator module 206 may attempt to optimize the active action set 300 selected from the available action sets 208a-208n by projecting the agent simulators 302-310 into the future based on a different action set selected from the available action sets (e.g., an action set other than the currently active action set) and assessing mission status metrics quantifying the effectiveness of a change in behaviors. For example, simulating the future behaviors of the autonomous agents 102-110 within the FTRT environment 222 via the agent simulators 302-310 may provide mission status metrics indicating, e.g., a probability of mission success (greater or lesser likelihood of achieving a mission status 214 indicating completion of all mission objectives) and/or mission completion time (how quickly mission objectives might be completed) based on a particular active action set 300. In some embodiments, mission status metrics may indicate, e.g., objective completion trends (e.g., rate of objective completion over time); actual objective completion (e.g., proportion of objective completed, rate of completion over time) compared to projected objective completion; and/or resource availability (e.g., resource attrition over time, assets tied up in communications relays or other overhead).

In embodiments, the self-simulator module 206 may determine, via online simulation of the behaviors of the team 100 within the FTRT environment according to multiple action sets, an action set via which mission status metrics may be optimized. If, for example, an alternative action set 312 selected from the available action sets 208a-208n is determined by the self-simulator module 206 to result in a higher probability of mission success and/or a more rapid achievement of mission success than the current active action set, the self-simulator module 206 may provide the alternative action set 312 to the strategy manager 204 as an optimized action set 314. Accordingly, the strategy manager 204 may designate the optimized action set 314 as the new active action set, notifying other autonomous agents 104-110 within the team 100 as well as any remote human operators (120, FIG. 1) of the change in agent behavior. In embodiments, FTRT simulation of the behaviors and/or actions of the team 100 according to various action sets 208a-208n may be online or offline. For example, the autonomous agent 102 may offload FTRT simulator processing to an offboard system (e.g., which may have greater and/or faster processing resources) which may then return mission status metrics, optimized action sets, and/or other simulation results to the autonomous agent. In some embodiments, mission status metrics as well as other detailed results of FTRT simulator processing (e.g., specific paths and/or actions taken by a particular agent simulator 302-310) may be forwarded to the remote operator (120, FIG. 1) for further analysis.

In some embodiments, the self-simulator module 206 may project multiple action sets 208a-208n and/or their component actions forward in time via the FTRT environment 222 and agent simulators 302-310. For example, FTRT simulations of the team 100 within the FTRT environment 222 may determine that the highest probability of mission success and/or the fastest completion of mission objectives may be reached via a composite array or sequence of individual actions 316 selected from more than one preloaded action set 208c-208e; e.g., a behavior sequence not currently accounted for by the predetermined action sets. Accordingly, in some embodiments the self-simulator module 206 may designate the optimized action set 314 by assembling a new action set 318 from individual actions 316 selected from two or more different preloaded action sets 208c-208e, providing the new action set to the strategy manager 204.

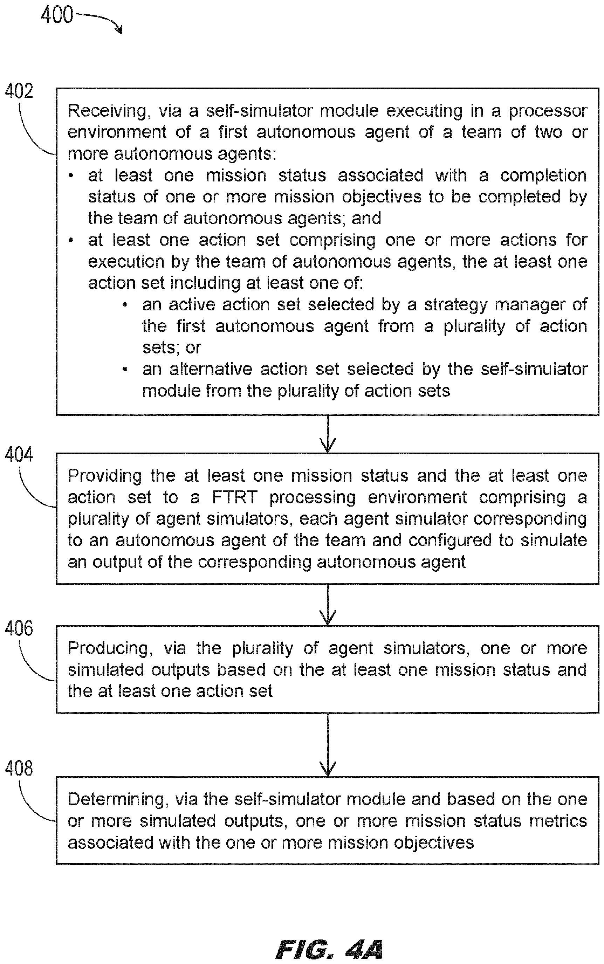

Referring now to FIG. 4A, the method 400 may be implemented by the autonomous agent 102 and may include the following steps.

At a step 402, a self-simulator module within a processing environment of the autonomous agent receives a current mission status, e.g., relevant to progress toward completion of a set of mission objectives by the autonomous agent and its team of autonomous agents. Further, the self-simulator receives one or more action sets (e.g., action configuration), e.g., a set or sequence of actions executable by the autonomous agent (and/or its team of agents). For example, the received action sets may include the currently active action set (e.g., determining the behavior of the autonomous agent and/or team of agents) and/or alternative action sets selected for assessment by the self-simulator module.

At a step 404, the self-simulator module provides the current mission status and the selected action set/s to a faster-than-real-time (FTRT) processing environment wherein a set of agent simulators are configured to emulate the team of autonomous agents (e.g., including the instant autonomous agent) and simulate the output of each autonomous agent according to the current mission status by projecting into the future the behaviors and/or actions based on each selected action set.

At a step 406, the agent simulators provide time-projected output based on the supplied mission status and selected action sets, e.g., projecting the behaviors and resulting commands of each autonomous agent forward in time within the FTRT environment.

At a step 408, the self-simulator module determines mission status metrics based on the simulated output provided by the agent simulators within the FTRT environment. For example, the self-simulator module may determine a probability of mission success (e.g., completion of mission objectives), and/or a completion time at which mission completion is achieved according to one or more selected action sets.

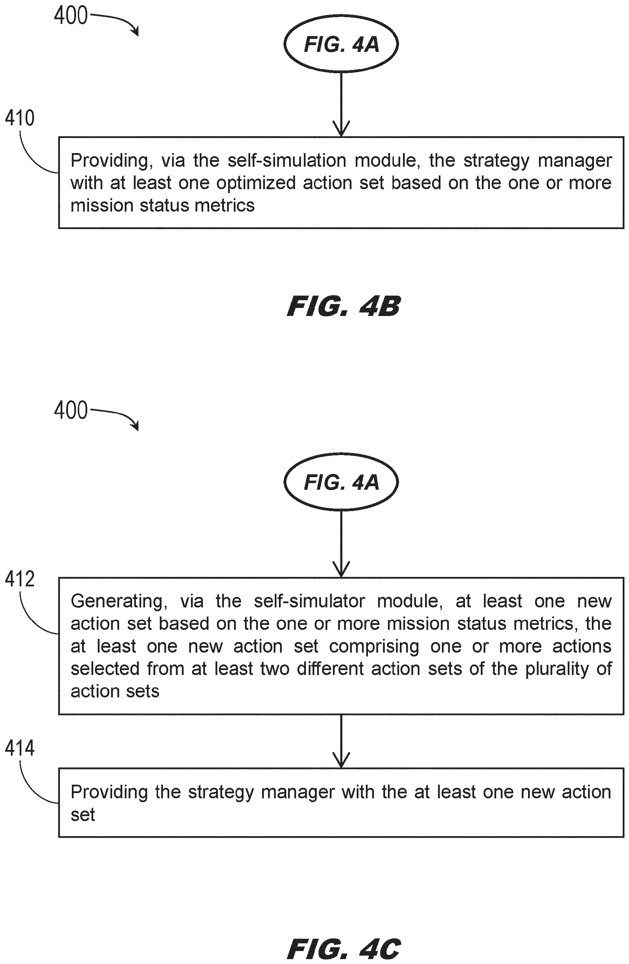

Referring now to FIG. 4B, the method 400 may include an additional step 410. At the step 410, the self-simulator module provides a strategy manager of the autonomous agent with an optimized action set (e.g., to replace the currently active action set in order to optimize mission status metrics, such as maximizing the probability of mission completion and/or minimizing the time to mission completion). For example, if a particular alternative action set (e.g., a selected preloaded action set other than the currently active action set) is associated with a higher probability of mission completion and/or a faster mission completion time, the self-simulator module may designate the alternative action set as an optimized action set and provide the optimized action set to the strategy manager.

Referring now to FIG. 4C, the method 400 may include additional steps 412 and 414. At the step 412, the self-simulator module creates or assembles a new action set based on component actions selected from two or more different predetermined action sets. For example, the self-simulator may determine, via multiple simulations run within the FTRT environment, that the probability of mission completion may be maximized, the mission completion time may be minimized and/or other mission status metrics may be otherwise optimized, by selecting actions or behaviors for execution by the autonomous from two or more different action sets, based on the projected performance of the agent simulators within the FTRT environment.

At the step 414, the self-simulator module designates the newly generated or assembled action set as an optimized action set and provides the optimized action set to the strategy manager.

### CONCLUSION

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. An autonomous agent, comprising:
a communications interface configured for transmission and reception of messages between the autonomous agent and one or more second agents of a team of autonomous agents;
a memory configured for storage of:
processor-executable encoded instructions;
at least one goal world state associated with one or more mission objectives to be completed by the team of autonomous agents;
and
an action configuration of one or more action sets, each action set comprising one or more actions for execution by the autonomous agent;
and
a processing environment operatively coupled to the memory and configurable by the encoded instructions to provide:
an agent planner configured for:
receiving the at least one goal world state, at least one current world state, and an active action set of the one or more action sets;
selecting for execution external to the agent planner, based on the at least one goal world state and current world state, one or more actions from the active action set;
and
providing at least one command for execution by the autonomous agent, the at least one command based on the one or more executed actions;
a strategy manager operatively coupled to the agent planner and configured for receiving at least one mission status, each mission status associated with a completion status of the one or more mission objectives and, based on the at least one mission status, at least one of:
1) providing the active action set to the agent planner;
or
2) switching the active action set from a first action set to a second action set of the action configuration;
and
notifying the one or more second agents of the new active action set via the communications interface;
and
at least one self-simulator module operatively coupled to the strategy manager and configured for receiving the at least one mission status and at least one of a) the active action set or b) at least one alternative action set selected from the action configuration;
the self-simulator module including a faster-than-real-time (FTRT) simulation environment comprising a plurality of agent simulators, each agent simulator corresponding to the autonomous agent or to a second agent of the team and configured to, based on the at least one mission status and at least one of the active action set or the alternative action set, simulate an output of the corresponding autonomous agent or second agent;
and
the self-simulator module configured for determining, based on the simulated output, one or more mission status metrics associated with the one or more mission objectives.

2. The autonomous agent of Claim 1, wherein the one or more mission status metrics include a completion time associated with a completion of the one or more mission objectives by the team of autonomous agents based on at least one of the active action set or the alternative action set.

3. The autonomous agent of Claim 1 or 2, wherein the one or more mission status metrics include a mission success probability corresponding to a probability of completion of the one or more mission objectives by the team of autonomous agents based on at least one of the active action set or the alternative action set.

4. The autonomous agent of any of Claims 1 to 3, wherein the self-simulator module is further configured for providing the strategy manager with at least one optimized action set based on the one or more mission status metrics.

5. The autonomous agent of Claim 4, wherein the at least one optimized action set includes the at least one alternative action set.

6. The autonomous agent of Claim 4 or 5, wherein the self-simulator module is configured for:
generating at least one new action set based on the one or more mission status metrics, the at least one new action set comprising one or more actions selected from at least two different action sets of the action configuration;
and
wherein the at least one optimized action set includes the at least one new action set.

7. The autonomous agent of any preceding Claim, wherein the strategy manager is configured for:
receiving control input from a human operator;
and
switching the active action set from the first action set to the second action set based on the received control input.

8. The autonomous agent of any preceding Claim, wherein the autonomous agent is embodied in at least one of a partially autonomous vehicle, a fully autonomous vehicle, a ground-based vehicle, a water-based vehicle, or an airborne vehicle.

9. A method for online mission self-simulation, the method comprising:
receiving, via a self-simulator module executing in a processor environment of a first autonomous agent of a team of two or more autonomous agents:
at least one mission status associated with a completion status of one or more mission objectives to be completed by the team of autonomous agents;
and
at least one action set comprising one or more actions for execution by the team of autonomous agents, the at least one action set including at least one of:
an active action set selected by a strategy manager of the first autonomous agent from a plurality of action sets;
or
an alternative action set selected by the self-simulator module from the plurality of action sets;
providing the at least one mission status and the at least one action set to a faster-than-real-time (FTRT) processing environment comprising a plurality of agent simulators, each agent simulator corresponding to an autonomous agent of the team and configured to simulate an output of the corresponding autonomous agent;
producing, via the plurality of agent simulators, one or more simulated outputs based on the at least one mission status and the at least one action set;
and
determining, via the self-simulator module and based on the one or more simulated outputs, one or more mission status metrics associated with the one or more mission objectives.

10. The method of Claim 9, wherein determining, via the self-simulator module and based on the one or more simulated outputs, one or more mission status metrics includes:
determining, via the self-simulator module, a completion time associated with a fulfillment of the at least one mission objective by the team of autonomous agents based on the at least one action set.

11. The method of Claim 9 or 10, wherein determining, via the self-simulator module and based on the one or more simulated outputs, one or more mission status metrics includes:
determining, via the self-simulator module, at least one mission success probability corresponding to a probability of completion of the one or more mission objectives by the team of autonomous agents based on the at least one action set.

12. The method of any of Claims 9 to 11, further comprising:
providing, via the self-simulation module, the strategy manager with at least one optimized action set based on the one or more mission status metrics.

13. The method of Claim 12, wherein providing, via the self-simulation module, the strategy manager with at least one optimized action set based on the one or more mission status metrics includes:
providing the strategy manager with the at least one alternative action set.

14. The method of Claim 12 or 13, further comprising:
generating, via the self-simulator module, at least one new action set based on the one or more mission status metrics, the at least one new action set comprising one or more actions selected from at least two different action sets of the plurality of action sets;
and
wherein providing, via the self-simulation module, the strategy manager with at least one optimized action set based on the one or more mission status metrics includes:
providing the strategy manager with the at least one new action set.
